(19) **Europäisches Patentamt**

**European Patent Office**

**Office européen des brevets**

(11) **EP 0 918 213 B1**

(12) **FASCICULE DE BREVET EUROPEEN**

(45) Date de publication et mention
de la délivrance du brevet:
**25.08.2004 Bulletin 2004/35**

(51) Int Cl.⁷: **G01L 5/12**

(21) Numéro de dépôt: **98402863.9**

(22) Date de dépôt: **19.11.1998**

(54) **Dispositif de mesure de la poussée axiale sur un arbre tournant**

Vorrichtung zur Messung des Axialschubs in einer drehenden Welle

Device for measuring the axial load on a turning shaft

(84) Etats contractants désignés:
**BE DE ES FR GB IT**

(30) Priorité: **20.11.1997 FR 9714555**

(43) Date de publication de la demande:
**26.05.1999 Bulletin 1999/21**

(73) Titulaire: **Hispano-Suiza**
**75015 Paris (FR)**

(72) Inventeur: **Roger, Christian, Marie, Michel**
**92270 Bois Colombes (FR)**

(74) Mandataire: **Berrou, Paul**
**Snecma Moteurs**
**Propriété Intellectuelle,**
**B.P. 81**
**91003 Evry Cedex (FR)**

(56) Documents cités:
**EP-A- 0 290 651      FR-A- 2 442 436**
**FR-A- 2 666 894      US-A- 4 509 375**

**Description**

L'invention se rapporte à la mesure des forces, et plus particulièrement à un dispositif pour mesurer la poussée axiale qui s'exerce sur un arbre tournant et qui se transmet à la structure fixe supportant cet arbre par l'intermédiaire d'un palier.

L'amélioration des performances des machines passe par la mesure de paramètres représentatifs de leur comportement, que ce soit dans le cadre d'essais ponctuels ou dans le cas de mesures effectuées en continu pendant le fonctionnement de la machine, ceci afin d'en améliorer et d'en piloter ledit fonctionnement.

Le besoin de mesurer la poussée axiale s'excerçant entre un arbre tournant et la structure fixe qui le supporte se manifeste notamment mais non exclusivement dans le cas de turbomachines telles les turbines industrielles ou les turbomoteurs pour aéronefs. Il s'agit habituellement d'un arbre ou d'un rotor relié à la structure fixe par au moins un palier ayant au moins une fonction de butée.

On connait de nombreux dispositifs permettant d'effectuer une telle mesure. L'un des plus répandu comporte une liaison axialement déformable entre le palier et la structure fixe, ainsi qu'un moyen de mesurer ladite déformation et d'en déduire la poussée axiale qui l'a provoquée.

On comprend que de tels dispositifs doivent être prévus au moment de la conception de la machine et qu'ils pèsent sur cette conception par leur encombrement et par les contraintes qu'ils imposent.

Le problème à résoudre est de proposer un dispositif de mesure de la poussée axiale qui s'exerce sur un arbre tournant, un tel dispositif pouvant être facilement installé sur un matériel existant avec une modification minimale de ce matériel, un tel dispositif devant être aussi peu encombrant afin d'être facilement intégré dans ce matériel existant ou dans tout matériel nouveau.

Pour résoudre ce problème, l'invention propose un dispositif de mesure de la poussée axiale s'exerçant entre un arbre tournant et une structure fixe, l'arbre tournant étant guidé par rapport à la structure fixe par au moins un palier présentant au moins une fonction de butée, ledit palier comportant à cet effet une butée tournante supportant la poussée axiale, ladite butée tournante étant tenue sur l'arbre tournant par un moyen de liaison axiale par poussée agissant sur la butée tournante, ledit moyen de liaison axiale reprenant la poussée axiale exercée entre l'arbre tournant et la structure fixe.

Un tel dispositif est remarquable en ce que :

a) la butée tournante est susceptible d'un déplacement axial sur l'arbre tournant,

b) deux flasques séparés par une rondelle élastique sont disposés sur l'arbre tournant à la sortie du palier entre le moyen de liaison axiale et la butée tournante, lesdits flasques présentant chacun un flanc de mesure, lesdits flancs de mesure étant tournés dans le même sens,

c) deux sondes de mesure de déplacement solidaires de la structure fixe sont positionnées chacune face à un flanc de mesure.

d) un moyen pour calculer la différence des mesures desdites sondes et pour en déduire la poussée axiale.

Un tel dispositif a pour fonction de déformer axialement en compression une rondelle élastique sur l'arbre tournant sous l'effet de la poussée axiale, et de déduire de la mesure des variations de position des flancs de ladite rondelle élastique, à partir de la structure fixe, la valeur P de ladite poussée axiale. Ce dispositif de mesure présente un encombrement réduit et peut facilement être intégré autour de l'arbre dans une machine existante ou en cours de conception. Il ne nécessite pas de modifications de l'arbre et de la structure fixe autres que les moyens nécessaires à la fixation des éléments du dispositif.

L'invention présente aussi l'avantage de ne pas affaiblir l'arbre ou l'ensemble constitué par la structure fixe et le palier. De plus, la rondelle élastique peut naturellement résister à un effort de compression P très supérieur aux efforts de compression P correspondants à son domaine de déformation élastique. Ainsi une augmentation anormale de P ne peut en conséquence pas produire de rupture au niveau des moyens de l'invention. De plus, une telle augmentation anormale de P ne provoquera qu'un décalage minime de la position axiale de l'arbre.

Dans ce dispositif, la poussée axiale qui se transmet entre l'arbre tournant et la structure fixe passe successivement par la liaison axiale sur l'arbre tournant, un premier flasque, la rondelle élastique, le second flasque, la butée tournante et le palier de butée lui-même qui transmet l'effort axial à la structure fixe. Ainsi, la bague élastique est mise en compression par la poussée axiale, ce qui a pour effet de la déformer et de rapprocher les deux flasques l'une de l'autre. Ce rapprochement E est égal à la différence des déplacements axiaux E1 et E2 des deux flasques, E1 et E2 étant mesurés par les deux sondes de déplacement solidaires de la structure fixe. Si on appelle K la raideur axiale de la rondelle élastique, la poussée axiale P est donnée par la relation :

$$P = K \times \Delta E$$

avec : $\Delta E = (E2 - E1)$

Ainsi, le dispositif permet de mesurer la poussée axiale sans devoir aménager de zones de déformation dans la structure fixe ou dans l'arbre, ce qui en préserve l'intégrité. La rondelle élastique et les flasques permettant d'en mesurer l'épaisseur à l'aide de sondes de déplacement sont peu volumineux et facilement intégrables à la périphérie de l'arbre.

Avantageusement, la rondelle élastique et les flasques seront disposés à la sortie du palier, afin d'utiliser l'espace qui entoure l'arbre à cet endroit.

Avantageusement, aussi on utilisera des sondes de déplacement sans contact du type à courant de Foucault. Ces sondes de taille réduite peuvent facilement être insérées dans la machine. Elles présentent une bonne sensibilité, de l'ordre de 10mV/µm, ce qui permet d'utiliser une rondelle élastique très dure afin de ne provoquer qu'un déplacement axial très faible et donc négligeable de l'organe tournant sous charge.

Avantageusement enfin la rondelle élastique d'épaisseur E comportera une âme sur chaque flanc de laquelle sont disposés de part et d'autre au moins deux bossages disposés en quinconce. Une telle disposition a pour effet de provoquer la variation ΔE de son épaisseur E par la flexion alternée de l'âme entre les bossages, et pour résultat d'autoriser une rondelle élastique offrant une plage très étendue de raideurs sous un encombrement réduit.

L'invention sera mieux comprise et les avantages qu'elle procure apparaitront plus clairement au vu d'un exemple détaillé de réalisation et des figures annexées.

La figure 1 illustre un exemple de réalisation de l'invention dans lequel l'organe de liaison axiale est un écrou qui assure aussi la fonction du premier flasque.

La figure 2 illustre par une vue de face un exemple de réalisation de la rondelle élastique avec une âme sur chacun des flancs de laquelle quatre bossages disposés en quinconce par rapport aux bossages de l'autre flanc.

La figure 3 illustre ce même exemple par une vue de profil.

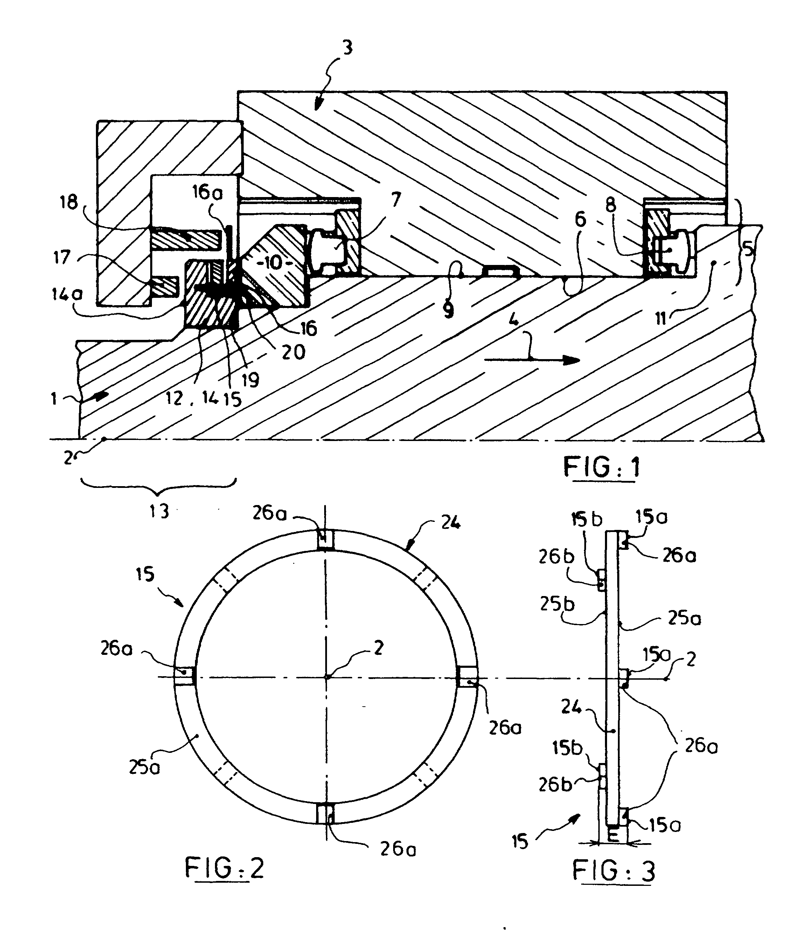

On se reportera en premier lieu à la figure 1. L'arbre tournant 1 est en rotation suivant un axe géométrique de rotation 2 à l'intérieur de la structure fixe 3 de la machine. L'arbre 1 exerce sur la structure fixe 3 une poussée axiale référencée 4 de valeur P qu'il s'agit de mesurer. L'arbre 1 est guidé en rotation et positionné en translation par un palier 5 à portance hydrostatique. Le palier 5 comporte notamment un alésage cylindrique 6 fixe flanqué de deux butées fixes 7 et 8 en opposition. L'alésage cylindrique 6 entoure une portée cylindrique 9 aménagée sur l'arbre tournant 1 et coopère ainsi avec ladite portée cylindrique 9 pour assurer le guidage en rotation dudit arbre tournant 1. Le palier 5 comporte aussi deux butées tournantes 10 et 11 placées sur l'arbre tournant 1 en regard des butées fixes référencées respectivement 7 et 8 et coopérant avec lesdites butées fixes 7, 8 pour assurer le positionnement en translation de l'arbre tournant 1 par rapport à la structure fixe 3. La butée tournante 10 transmet dans cet exemple la poussée 4. Cette butée tournante 10 est naturellement placée du côté du palier 5 opposé au sens de la poussée axiale 4 et est maintenue par un écrou 12 faisant office de moyen de liaison axiale, ledit écrou 12 étant vissé sur l'arbre tournant 1 et exerçant sur ladite butée tournante 10 la poussée axiale 4. La seconde butée tournante 11, située de l'autre côté du palier 5, est dans cet exemple réduite à un épaulement aménagé sur l'arbre tournant 1.

Selon l'invention, la butée tournante 10 qui transmet la poussée 4 est montée coulissante sur l'arbre tournant 1. Un faible débattement axial est suffisant. L'écrou 12 fait aussi office de premier flasque 14 et comporte le premier flanc de mesure 14a tourné dans le sens opposé à l'exercice de la poussée axiale 4, ce premier flanc de mesure 14a ayant la forme d'une couronne plane et perpendiculaire à l'axe géométrique 2. Entre l'écrou 12 et la butée tournante 10 à la sortie 13 du palier 5 sont disposés successivement sur l'arbre 1 une rondelle élastique 15 ainsi qu'un second flasque 16 comportant un second flanc de mesure 16a tourné dans la même direction que le premier flanc de mesure 14a, ce second flanc de mesure 16a ayant également la forme d'une couronne plane et perpendiculaire à l'axe géométrique 2. Deux sondes de déplacement 17 et 18 solidaires de la structure fixe 3 sont disposées respectivement en regard du premier et du second flanc de mesure 14a et 16a respectivement de l'écrou 12 et du second flasque 16. On notera que l'écrou 12 arrive en appui contre un épaulement 19 aménagé sur l'arbre tournant 1 afin de positionner axialement avec précision la butée tournante 10. Le fonctionnement de l'ensemble est le suivant. La poussée axiale 4 exercée sur l'arbre tournant 1 se transmet à la structure fixe 3 par l'intermédiaire successivement de l'écrou 12, de la rondelle élastique 15, du second flasque 16, de la butée tournante 10 et de la butée fixe 7. Sous l'effet de la poussée axiale 4, la rondelle élastique 15 est axialement comprimée, ce qui provoque le rapprochement des flancs de mesure 14a et 16a respectivement de l'écrou 12 faisant office de premier flasque 14 et du second flasque 16. Ce rapprochement est établit en faisant la différence des mesures effectuées par les sondes de mesure 17 et 18 respectivement sur les flancs de mesure 14a et 16a.

Avantageusement, l'écrou 12 et la butée tournante 10 seront liés en rotation, par exemple par une goupille 20.

On se reportera maintenant simultanément aux figures 2 et 3. La rondelle élastique 15 comporte une âme 25 en forme de rondelle plate à section rectangulaire avec deux flancs 25a et 25b sur chacun desquels ont été disposés des bossages équidistants référencés respectivement 26a et 26b, les bossages 26a sur le flanc 25a étant disposés en quinconce par rapport aux bossages 26b sur l'autre flanc 25b. Les surfaces 15a et 15b respectivement des bossages 26a et 26b constituent les flancs 15a, 15b de la rondelle élastique 15, lesdits flancs 15a, 15b étant au contact des flasques 14 et 16. Sous l'effet de la poussée axiale 4, l'âme 25 se déforme alternativement et axialement entre les bossages 26a, 26b ce qui produit une variation ∆E de l'épaisseur E de la rondelle élastique 15 en fonction de la valeur P de la poussée 4. L'homme du métier ajustera très simplement la raideur K de la rondelle élastique 15 en jouant sur l'épaisseur de l'âme 25, sa largeur ainsi que sur le nombre de bossages 26a, 26b.

L'invention n'est pas limitée aux réalisations présentées, mais en couvre au contraire toutes les variantes qui pourraient leur être apportées sans sortie de leur cadre ni de leur esprit. Ainsi :

Les flasques 14, 16 peuvent être des pièces distinctes, ou au contraire peuvent voir leur fonction assurer respectivement par l'écrou 12 et la butée tournante 10 supportant la poussée axiale 4.

L'organe de liaison axiale 12, qui est dans cet exemple l'écrou invoqué ci-dessus, peut être remplacé par tout moyen équivalent, par exemple un épaulement usiné sur l'organe tournant. Dans cet exemple, la fonction du premier flasque 14 serait avantageusement assurée par cet épaulement 12 sur un flanc duquel serait alors usinée le premier flanc de mesure 14a.

On remarquera aussi que l'invention est applicable à tout type de palier, tel un palier hydrodynamique, à roulement où un palier dont la bague tournante assurerait la fonction de la butée tournante 10.

## Revendications

1. Dispositif de mesure de la poussée axiale exercée entre un arbre tournant et une structure fixe, ledit arbre tournant (1) tournant selon un axe géométrique de rotation (2), ladite poussée axiale (4) s'exerçant entre l'arbre tournant (1) et la structure fixe (3), ledit arbre tournant (1) étant guidé par rapport à ladite structure fixe (3) par au moins un palier (5), ledit palier (5) comportant une butée tournante (10) supportant la poussée axiale (4), ladite butée tournante (10) étant tenue par un moyen de liaison axiale (12) agissant par poussée sur ladite butée tournante (10) et reprenant la poussée axiale (4), **caractérisé en ce que** :

    a) la butée tournante (10) est susceptible d'un déplacement axial sur l'arbre tournant (1),
    b) deux flasques (14, 16) séparés par une rondelle élastique (15) sont disposés entre le moyen de liaison axiale (12) et la butée tournante (10), afin de déformer axialement en compression ladite rondelle élastique (15) sur l'arbre tournant (1), lesdits flasques (14, 16) présentant chacun un flanc de mesure (14a, 16a) orientés dans le même sens, ladite rondelle élastique (15) comportant des flancs (15a, 15b),
    c) deux sondes de mesure de déplacement (17, 18) solidaires de la structure fixe (3) sont positionnées chacune face à un flanc de mesure (14a, 16a),
    d) un moyen est prévu pour faire la différence des mesures desdites sondes (17, 18) et pour établir la poussée axiale correspondante afin de déduire de la mesure des variations de position des flancs (15a, 15b) de ladite rondelle élastique (15) à partir de la structure fixe (3), la valeur P de ladite poussée axiale (4).

2. Dispositif selon la revendication 1 **caractérisé en ce que** la rondelle élastique (15) et les flasques (14, 16) sont disposés sur l'arbre (1) à la sortie (13) du palier (5), afin d'utiliser l'espace entourant l'arbre (1) à cet endroit.

3. Dispositif selon la revendication 1 ou 2 **caractérisé en ce que** les sondes de mesure de déplacement (17,18) sont à courant de Foucault.

4. Dispositif selon l'une quelconque des revendications 1 à 3, **caractérisé en ce que** la rondelle élastique (15) comporte une âme (25) sur chacun des flancs (25a, 25b) de laquelle sont disposés au moins deux bossages respectivement (26a) et (26b), les bossages (26a, 26b) d'un flanc (25a, 25b) de l'âme (25) étant disposés en quinconce par rapport aux bossages (26b, 26a) de l'autre flanc (25b, 25a), les surfaces des bossages (26a, 26b) constituant les flancs (15a, 15b) de la rondelle élastique (15), afin de provoquer la variation ∆E de son épaisseur E par la flexion alternée de son âme (25) entre les bossages (26a, 26b).

## Patentansprüche

1. Vorrichtung zum Messen des zwischen einer drehenden Welle und einer festen Struktur ausgeübten Axialschubs, wobei die drehende Welle (1) sich entsprechend einer geometrischen Rotationsachse (2) dreht, der Axialschub (4) zwischen der drehenden Welle und der festen Struktur (3) auftritt, die drehende Welle (1) relativ zu der festen Struktur (3) durch wenigstens ein Lager (5) geführt wird, das Lager (5) einen drehenden Anschlag (10) aufweist, der den Axialschub (4) aufnimmt, der drehende Anschlag (10) von einem axialen Verbindungsmittel (12) gehalten wird, das durch Druck auf den drehenden Anschlag einwirkt und den Axialschub (4) aufnimmt,
    **dadurch gekennzeichnet, daß**

    a) der drehende Anschlag (10) eine axiale Verschiebung auf der drehenden Welle (1) ausführen kann,
    b) zwischen dem axialen Verbindungsmittel (12) und dem drehenden Anschlag (10) zwei durch eine elastische Scheibe (15) getrennte Flansche (14, 16) angeordnet sind, um die elastische Scheibe (15) auf der drehenden Welle (1) einer Druckverformung in axialer Richtung zu unterziehen, wobei jeder der Flansche (14, 16) eine Meßflanke (14a, 16a) aufweist, die in der gleichen Richtung orientiert sind, und wobei die elastische Scheibe (15) Flanken (15a, 15b) aufweist,

c) zwei mit der festen Struktur (3) fest verbundene Verschiebungs-Meßsonden (17, 18) jeweils gegenüber einer Meßflanke (14a, 16a) angeordnet sind,

d) eine Einrichtung vorgesehen ist zur Bildung der Differenz der Messungen der Sonden (17, 18) und zur Ermittlung des entsprechenden Axialschubs, um aus der Messung der Änderung der Positionen der Flanken (15a, 15b) von der festen Struktur (3) aus den Wert P des Axialschubs (4) herzuleiten.

2. Vorrichtung nach Anspruch 1, **dadurch gekennzeichnet, daß** die elastische Scheibe (15) und die Flansche (14, 16) auf der Welle (1) am Ausgang (13) des Lagers (5) angeordnet sind, um den Raum zu nutzen, der die Welle (1) an dieser Stelle umgibt,

3. Vorrichtung nach Anspruch 1 oder 2, **dadurch gekennzeichnet, daß** die Verschiebungs-Meßsonden (17, 18) Wirbelstromsonden sind.

4. Vorrichtung nach einem der Ansprüche 1 bis 3, **dadurch gekennzeichnet, daß** die elastische Scheibe (15) einen Kern (24) besitzt, auf dessen Seiten (26a, 25b) jeweils wenigstens zwei Vorsprünge (26a bzw. 26b) angeordnet sind, wobei die jeweiligen Vorsprünge (26a) und (26b) einer Seite (25a, 25b) des Kerns (24) relativ zu den Vorsprüngen (26b, 26a) der anderen Seite (25b, 25a) versetzt angeordnet sind, wobei die Oberflächen der Vorsprünge (26a, 26b) die Flanken (15a, 15b) der elastischen Scheibe (15) bilden, um die Änderung ΔE ihrer Dicke E durch alternierende Durchbiegung ihres Kerns (25) zwischen den Vorsprüngen (26a, 26b) herbeizuführen.

**Claims**

1. Device for measuring the axial thrust exerted between a rotating shaft and a stationary structure on said rotating shaft (1) rotating about a geometric axis of rotation (2), said axial thrust (4) being exerted between the rotating shaft (1) and the stationary structure (3), said rotating shaft (1) being guided with respect to said stationary structure (3) by at least one bearing (5), said bearing (5) comprising a rotating thrust surface (10) withstanding the axial thrust (4), said rotating thrust surface (10) being held by a means (12) of axial connection acting by thrust on said rotating thrust surface (10) and taking up the axial thrust (4), **characterized in that**:

    a) the rotating thrust surface (10) is capable of an axial displacement along the rotating shaft (1),

    b) two cheeks (14, 16), separated by an elastic washer (15), are arranged between the means (12) of axial connection and the rotating thrust surface (10), in order to deform said elastic washer (15) axially in compression on the rotating shaft (1), said cheeks (14, 16) each having a measurement flank (14a, 16a) facing in the same direction, said elastic washer (15) comprising cheeks (15a, 15b),

    c) two displacement-measurement probes (17, 18) secured to the stationary structure (3) are each positioned facing a measurement flank (14a, 16a),

    d) a means is provided for calculating the difference between the measurements from said probes (17, 18) and for establishing the corresponding axial thrust,

in order to deduce the value P of said axial thrust (4) from measurements taken from the stationary structure (3) of the variations in position of the flanks (15a, 15b) of said elastic washer (15).

2. Device according to Claim 1, **characterized in that** the elastic washer (15) and the cheeks (14, 16) are placed on the shaft (1) at the exit (13) from the bearing (5), so as to make use of the space surrounding the shaft (1) at this point.

3. Device according to Claim 1 or 2, **characterized in that** the displacement-measurement probes (17, 18) are Eddy-current probes.

4. Device according to any one of Claims 1 to 3, **characterized in that** the elastic washer (15) comprises a web (25) on each of the flanks (25a, 25b) of which there are arranged at least two bosses (26a) and (26b) respectively, the bosses (26a, 26b) of one flank (25a, 25b) of the web (25) being arranged in a staggered configuration with respect to the bosses (26b, 26a) of the other flank (25b, 25a), the surfaces of the bosses (26a, 26b) constituting the flanks (15a, 15b) of the elastic washer (15), so as to bring about the variation ΔE in its thickness E by the alternate bending of its web (25) between the bosses (26a, 26b).

FIG : 1

FIG : 2

FIG : 3